# EUROPEAN PATENT APPLICATION

(11) **EP 4 609 995 A1**
(43) Date of publication of application: **03.09.2025**
(21) Application number: 24160820.7
(22) Date of filing: 01.03.2024
(51) Int. Cl.: B25F 5/00

(54) **POWER TOOL AND CONTROL METHOD OF AN ELECTRIC POWER TOOL**

(71) Applicant: Techtronic Cordless GP, Anderson, SC 29621 (US)
(72) Inventor: CHEN, Zi Cong, Dongguan City, Guangdong Province (CN); WEN, Chao, Dongguan City, Guangdong Province (CN)
(74) Representative: Meissner Bolte Partnerschaft mbB

(57) **Abstract**

An electric power tool comprises a motor, a controller configured to control the motor to operate in a first operating state by holding a first physical quantity related to the motor operation to be substantially constant, and a load detector configured to detect an increased load by measuring a second physical quantity different from the first physical quantity; wherein the controller is configured to control the motor to operate in a second operating state when a delta in the second physical quantity measured by the load detector rises above a pre-set threshold and remains above the pre-set threshold for a pre-defined period of time; wherein a power output of the motor in the second operating state is higher than a power output of the motor in the first operating state.

## Description

### FIELD OF THE DISCLOSURE

The present disclosure relates to power tools and, in particular, to a power tool which is able to operate in multiple states.

### BACKGROUND OF THE DISCLOSURE

A common design for power tools includes a speed control trigger handled by user, so that a speed / power output of the power tool once it is powered on can be controlled in a predictable manner by the user.

However, some power tools that are heavy and powerful are difficult for users to manually operate. For example, a powerful electric hammer drill may vibrate and can easily shift or tilt when handled by the user. This can cause difficulties in correctly positioning the tool relative to a work piece and can result in working errors or safety issues.

It is an object of the present disclosure to address or at least partially ameliorate some of the above problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided an electric power tool, comprising a motor; a controller configured to control the motor to operate in a first operating state by holding a first physical quantity related to the motor operation to be substantially constant; and a load detector configured to detect an increased load by measuring a second physical quantity different from the first physical quantity.

The controller is configured to control the motor to operate in a second operating state when a delta in the second physical quantity measured by the load detector rises above a pre-set threshold and remains above the pre-set threshold for a pre-defined period of time.

A power output of the motor in the second operating state is higher than a power output of the motor in the first operating state.

The first physical quantity and the second physical quantity may each be selected from a list including current, torque, power rating, motor speed, and Pulse Width Modulation (PWM) status.

The load detector may further detect a decreased load by measuring the second physical quantity.

The controller may further configure the motor to operate in the first operating state when the delta in the second physical quantity falls below a second pre-set threshold and remains below the second pre-set threshold for a second pre-defined period of time.

The second pre-set threshold may be equal to the first pre-set threshold.

The controller may be configured to set an initial value for the second physical quantity when the motor is operating in the first operating state.

The pre-set threshold for the delta in the second physical quantity may be in the range of 5 to 30%.

The pre-defined period of time may be in the range of 100 to 10000ms.

The power tool may be one of a circular saw, a reciprocal saw, a chain saw, a jig saw and a power drill.

In accordance with a second aspect of the present disclosure, there is provided a method to control operation of a motor of an electric power tool, the method comprising operating in a first operating state by holding a first physical quantity related to the motor operation to be substantially constant; detecting an increased load by measuring a second physical quantity different from the first physical quantity; and operating in a second operating state when a delta in the second physical quantity rises above a pre-set threshold and remains above the pre-set threshold for a pre-defined period of time.

A power output of the motor in the second operating state is higher than the power output of the motor in the first operating state.

The first physical quantity and the second physical quantity may each be selected from a list including current, torque, power rating, motor speed, and Pulse Width Modulation (PWM) status.

The method may include: detecting a decreased load by measuring the second physical quantity, and operating in the first operating state when the delta in the second physical quantity falls below a second pre-set threshold and remains below the second pre-set threshold for a second pre-defined period of time.

The second pre-set threshold may be equal to the first pre-set threshold.

The method may include setting an initial value for the second physical quantity when the motor is operating in the first operating state.

The pre-set threshold for the delta in the second physical quantity may be in the range of 5 to 30%.

The pre-defined period of time may be in the range of 100 to 10000ms.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
Figure 1 is a schematic diagram showing an electric power tool according to an embodiment.
Figure 2a is an operation flowchart showing a process executed by an electric power tool according to an embodiment.
Figure 2b is an operation flowchart showing a process executed by an electric power tool according to an embodiment.
Figures 3a-3d are the charts showing variations of operational parameters according to an embodiment.
Figure 4a is a schematic diagram showing an electric power tool according to an embodiment.
Figure 4b is a schematic diagram showing an electric power tool according to an embodiment.
Figure 5a is a flowchart showing a method for controlling the operation of a motor of an electric power tool according to an embodiment.
Figure 5b is a flowchart showing a method for controlling the operation of a motor of an electric power tool according to an embodiment.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

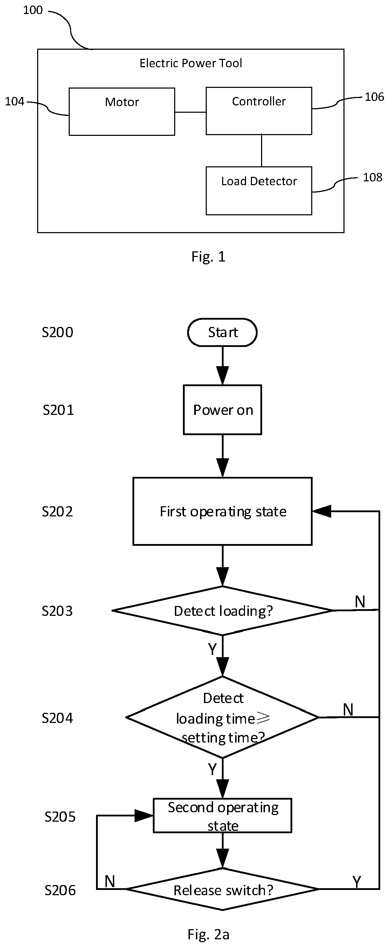

Referring to the drawings, there is shown in Figure 1 a schematic diagram showing an electric power tool 100 according to an embodiment. The electric power tool 100 comprises a motor 104, a controller 106, and a load detector 108. The electric power tool 100 may be any power tool 100 including, but not limited to, handheld, carried, or pushed/driven tools. Examples include a line trimmer, chainsaw, power drill, lawnmower, pillar drill, leaf blower, snow-blower, etc.

The motor 104 may be configured to drive the working component (not shown). The motor 104 may be a DC or AC, brushed or brushless motor. The motor 104 may be configured to operate at any suitable input voltage, for example, 9V, 12V, 18V, 20V or 40V DC, 110V or 240V AC, or any other suitable voltage rating.

The controller 106 is configured to control the motor 104 to operate in a first operating state by holding a first physical quantity related to the motor operation to be substantially constant. The first physical quantity may be selected from a list including, for example, current, torque, power rating, motor speed, and Pulse Width Modulation (PWM) status. The controller 106 may be configured to hold the first physical quantity to be substantially constant by holding the first physical quantity to be within a threshold range of values. The first physical quantity may be held to be within a predefined percentage range of a fixed value. For example, the predefined percentage range may be +/- 1%, +/- 3%, +/- 5%, or any other suitable range of the fixed value. The threshold range may be also be expressed as a fixed value, rather than percentage values, as required. A smaller range than the examples provided may be used in some examples, e.g. where the tool is large and a percentage change is significant for the user, a larger range may be used in some examples, e.g. in circumstances where the first physical quantity is more easily varied.

The controller 106 may fix an output to the motor 104 which is related to the first physical quantity. In some examples, the controller 106 may separately monitor the first physical quantity to ensure it remains substantially constant. The controller 106 may monitor a sensor linked with the motor 104 which is related to the first physical quantity, For example, where the first physical quantity is the power rating, the sensor may be a power meter linked with the motor, or where the first physical quantity is the motor speed, the sensor may be a motor speed sensor, e.g. a Hall sensor, linked with the motor.

The load detector 108 is configured to detect an increased load by measuring a second physical quantity different from the first physical quantity. Similar to the first physical quantity, the second physical quantity may be selected from the list including, for example, current, torque, power rating, motor speed, and Pulse Width Modulation (PWM) status. Under an increased load, the second physical quantity may rise or fall, for example, the motor speed may fall under an increase load, and the current may rise under an increased load.

The load detector 108 may comprise a sensor linked with the motor 104 which is related to the second physical quantity, For example, where the second physical quantity is the power rating, the sensor may be a power meter linked with the motor, or where the first physical quantity is the motor speed, the sensor may be a motor speed sensor, e.g. a Hall sensor, linked with the motor.

The controller 106 is configured to control the motor 104 to operate in a second operating state when a delta in the second physical quantity measured by the load detector 108 rises above a pre-set threshold and remains above the pre-set threshold for a pre-defined period of time.

A power output of the motor 104 in the second operating state is higher than a power output of the motor 104 in the first operating state. For example, when the motor 104 is in the second operating state, there may be no limit to the power output of the power tool 100 and full power output can be therefore be achieved.

The first operating state may be referred to as a pre-working state which is a state when the motor 104 is in a state without full power output. The first physical quantity may be held constant at a value which results in a motor power output less than 100%. The second operating state may be referred to as a normal state which is a state when the motor 104 is in a state with full power output available.

When the motor 104 is operating in the pre-working state, and the load detector 108 measures a delta in the second physical quantity which is above the pre-set threshold, the controller 106 may determine that the motor 104 is under a load condition. The load condition may correspond to a load applied to the working component, for example, the working component making contact with a work piece. When the load detector 108 detects a load in this way and the load remains there for a period of time, the controller 106 may control the motor 104 to switch to the normal state.

In this way, instead of initiating the full power mode, a pre-working state with partial power output can be launched when the power tool 100 is not operating and the switch of the power tool 100 is pressed.

In this way, the users can operate the power tool 100 more easily in this auxiliary pre-working state mode. At power levels less than full power, vibration of the power tool 100 can be reduces, improving the handling of the tool. Before a load is applied to the tool, i.e. before the working component is contacted with a workpiece, the user can position the tool more precisely without excess vibration caused by the motor. The constant lower power operation of the motor 104 can be maintained without requiring fine throttle control by the user. The lifespan for the power tool 100 can also be extended by reducing unnecessary wear and tear.

Once the load detector 108 detects a load for a period of time, the state for the motor 104 can be automatically switched to the normal mode which can allow immediate access to the full power output of the tool without an additional user input.

Figure 2a is an operation flowchart showing a process executed by an electric power tool 100 according to an embodiment. The process starts at step S200. At step S201 the power to the power tool 100 may be turned on. For example, the power may be turned on by activating a power on switch.

At step S202 the power tool 100 is initialised in the first operating state. In the first operating state, any of first physical quantities previously described may be held constant. In some examples, the first operating state can be activated / deactivated by user via a separate switch. If the first operating state is deactivated in this way, the power tool 100 can be made to operate in a normal way with immediate access to the full power mode.

In the first operating state, the output of the motor 104 may be held at a value which is 20-50% of the maximum output. For example, the PWM or duty ratio may be held at 20-50%, or the power output may be held at 20-50% of the maximum power output. In some examples, a power tool 100 which is heavier or harder to handle tools may have duty ratio which is below 20% in the first operating state. The motor output may be held constant regardless of the position of a throttle or speed control switch.

When the power tool 100 is initialised, the motor 104 of the power tool 100 may be accelerated until the predefined output level is reached. The motor 104 may be accelerated at a maximum possible torque or a predefined acceleration rate which is lower than the maximum possible torque. In some examples, the power tool 100 may be implemented with artificial limit on the acceleration of the motor speed.

The controller 106 may be configured to set an initial value for the second physical quantity when the motor 104 is operating in the first operating state. The initial value for the second physical quantity may be set after a predefined period of time, at which the motor 104 is expected to have reached a steady state. The initial value for the second physical quantity may be set after the motor 104 is detected to be operating in a steady state. For example, the controller 106 may determine that the first physical quantity has reached a constant value, e.g. the motor 104 is operating at a constant speed. In some examples, the initial value for the second physical quantity may be preset by a manufacturer and stored in the controller.

At step S203, the load detector 108 may be configured to detect a load on the power tool. A load may be detected by the load detector 108 through measurement of the second physical quantity. For example, a load may be detected by the load detector 108 when a delta in the second physical quantity measured by the load detector 108 rises above a pre-set threshold. The delta in the second physical quantity may be measured with respect to the initial value set by the controller. In some examples, the pre-set threshold for the delta in the second physical quantity may be in the range of 5 to 30%. In some other examples, such as power tools handling different loads, the threshold percentage may be further varied. For example, a power tool 100 handling significantly heavier loads may have a pre-set threshold for the delta in the second physical quantity lower than 5%, because these smaller percentages equate to a large change in actual load, or may be greater than 30%, because such tools may be much more powerful and it is beneficial to ensure that the tool is correctly positioned before activated the second operating mode. On the other hand, a power tool 100 with delicate load manipulation may have a pre-set threshold for the delta greater than 30%, to account for the difficulty in detecting relatively smaller loads, or may be lower than 5%, to reduce any lag in activating the second operating mode which can be obstructive when working on fine pieces. In some examples, the pre-set threshold for the delta in the second physical quantity may be set as a fixed value of the second physical quantity, rather than a percentage change.

If a load is not detected, the process returns to step S202. If a load is detected, the process continues to step S204.

At step S204, the controller 106 may be configured to detect that a loading time on the power tool 100 is above a pre-defined period of time. The pre-defined period of time may be in the range of 100 to 10000ms, and it may vary depending on different power tool types. For example, a power tool 100 handling significantly heavier loads may have a pre-defined period of time higher than 10000ms, to ensure that the tool is correctly positioned before activating the second operating mode. A power tool 100 with delicate load manipulation may have a pre-defined period of time less than 100ms, to reduce any lag in activating the second operating mode which can be obstructive when working on fine pieces.

If the loading time on the power tool 100 is below a pre-defined period of time, the process returns to step S202. If the loading time on the power tool 100 is equal to or above a pre-defined period of time, the process continues to step S205.

At step S205, the controller 106 may be configured to operate the motor 104 in the second operating state.

In some examples, the output in the second operating state may be based on a position of a throttle or speed control switch. For example, a throttle may be provided as a trigger or lever with a continuous range for user setting of the desired output, or a multi-level speed control switch may be provided with two or more fixed output levels. In this way, the user can actuate the trigger or set the speed control switch to set a working output level of the power tool, and the motor output can be held constant in the first operating state until the load is detected and the working output level can be reached in the second operating state.

Alternatively, the motor 104 may be configured to have a fixed output in the second operating state. The fixed output may be the maximum power output or may be less than the maximum. In this way, the power tool 100 can be provided with a two-speed system which operates at a lower fixed output in the first operating state and a higher fixed output in the second operating state.

By switching speeds automatically the power tool 100 can be provided with a power on switch but a throttle or speed control switch is not required. In some examples, the output in the second operating state may be linked to the applied load. For example, the output may be linked to the second physical quantity, e.g. changing from the output value of the first operating state to a higher initial value when the second operating state is activated, then rising further proportional to the second physical quantity if the second physical quantity rises further above the pre-defined threshold.

At step S206, the controller 106 may be configured to monitor a state of the throttle or speed control switch. The controller 106 may determine whether or not the throttle or speed control switch has been released. If the throttle or speed control switch has not been released, the process may return to step S205, and the power tool 100 may remain in the second operating state. The power tool 100 may remain in the second operating state as long as the throttle or speed control switch is in an actuated state. For example, the throttle trigger may be continuously pressed by the user.

If the throttle or speed control switch has been released, the process may return to step S202. The power tool 100 may exit the second operating state when the switch is released. In some examples, the power tool 100 may return to the first operating state upon the release of the switch. In some examples, the power to the motor 104 may be turned off, and operation of the power tool 100 may be suspended.

The next time a load is detected at step S203 and the detection of load lasts for a period of time equal to or longer than the pre-defined period of time at step S204, the tool enters the second operating state at step S205. In this way, the power tool 100 can repeatedly move between the two operating states as required based on the control of the user and the application of load.

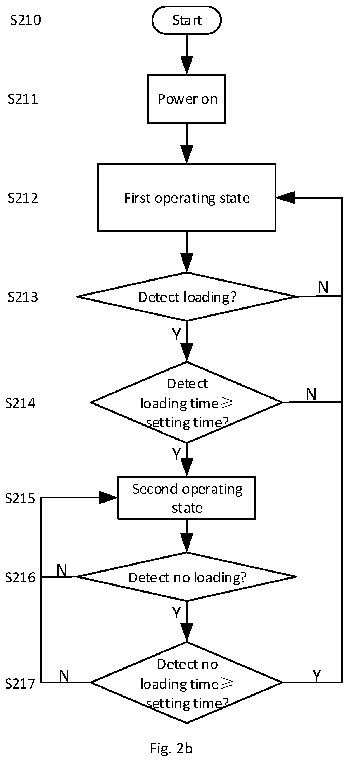

Figure 2b is an operation flowchart showing a process executed by an electric power tool 100 according to an embodiment. The process starts at step S210. Steps S211 to S215 are substantially the same as steps S201 to S205 described above with respect to Figure 2a.

At step S216, the load detector 108 may be configured to detect if the load applied on the power tool 100 is decreased. A decreased load may be detected by the load detector 108 through measurement of the second physical quantity. For example, a decreased load may be detected by the load detector 108 based on the delta in the second physical quantity. That is, the load detector 108 may be configured to monitor the change in the second physical quantity from the initial value set by the controller. The load detector 108 may be configured to determine that the load is decreased when the delta in the second physical quantity measured by the load detector 108 falls below a pre-set threshold.

In some examples, the pre-set threshold for the delta in the second physical quantity may be in the range of 5 to 30%. In some other examples, such as power tools handling different loads, the threshold percentage may be further varied. For example, a power tool 100 handling significantly heavier loads may have a pre-set threshold for the delta in the second physical quantity lower than 5%, because these smaller percentages equate to a large change in actual load, or may be greater than 30%, because such tools may be much more powerful and it is beneficial to ensure that the load is being genuinely removed from the piece. On the other hand, a power tool 100 with delicate load manipulation may have a pre-set threshold for the delta greater than 30%, to account for the difficulty in detecting relatively smaller change of the loads, or may be lower than 5%, to reduce any lag in determining the switch of operating modes which can be obstructive when working on fine pieces.

In some examples, the pre-set threshold for the delta in the second physical quantity may be set as a fixed value of the second physical quantity, rather than a percentage change. In some examples, the above pre-set threshold for the delta in the second physical quantity when detecting the decreased load may be equal to the pre-set threshold when detecting the increased load applied on the power tool. In some examples, the two pre-set thresholds may have different values. For example, the pre-set threshold for the delta in the second physical quantity when detecting the decreased load may be lower than the pre-set threshold when detecting the increased load applied on the power tool, so as to prevent rapid switching between the two modes.

If a decreased load is not detected, the process returns to step S215, and the power tool 100 may remain in the second operating state. The power tool 100 may remain in the second operating state as long as no decreased load is identified upon continuous detection by the load detector. If a decreased load is detected, the process continues to step S217.

At step S217, the controller 106 may be configured to detect that a time of the decreased load being detected is above a pre-defined period of time. The pre-defined period of time may be in the range of 100 to 10000ms, and it may vary depending on different power tool types. For example, a power tool 100 handling significantly heavier loads may have a pre-defined period of time higher than 10000ms, to ensure that the load is being genuinely removed from the piece. A power tool 100 with delicate load manipulation may have a pre-defined period of time less than 100ms, to reduce any lag in determining the switch of operating modes which can be obstructive when working on fine pieces.

If the time on the power tool 100 when the decreased load is being detected is below a pre-defined period of time, the process returns to step S215, and the power tool 100 may remain in the second operating state. The power tool 100 may remain in the second operating state until the decreased load is detected for more than the re-defined period of time. If the time on the power tool 100 when the decreased load is being detected is equal to or above a pre-defined period of time, the process returns to step S212, and the power tool 100 may exit the second operating state.

In some examples, the power tool 100 may return to the first operating state. In some examples, the power to the motor 104 may be turned off, and operation of the power tool 100 may be suspended. In some examples, the controller 106 may be configured to return the power tool 100 to the first operating state or suspend operation of the power tool, based on the level to which the load is reduced.

The next time a load is detected at step S213 and the detection of load lasts for a period of time equal to or longer than the pre-defined period of time at step S214, the tool enters the second operating state at step S215. In this way, the power tool 100 can repeatedly move between the two operating states as required based on the control of the user and the application of load.

In some examples, a third physical quantity different from the second physical quantity used when detecting the increased load may be used when detecting the decreased load. In some examples, multiple physical quantities can be used simultaneously to determine whether an increased load or a decreased load is detected.

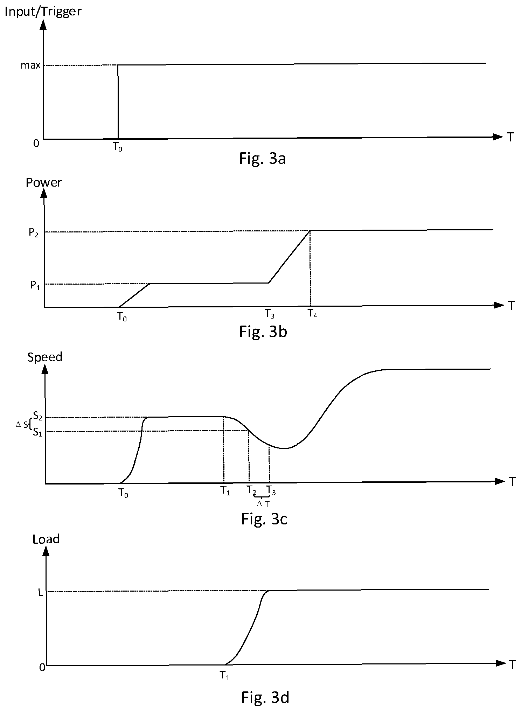

Figures 3a-3d are the charts showing variations of operational parameters according to an embodiment.

The power tool 100 is initially powered off until the trigger of the power tool 100 is actuated by the user at T0, see Fig. 3a. In this example, the user is assumed to actuate the trigger to its fullest extent and hold the trigger in this position for the duration of the example.

The power tool 100 enters the pre-working state when the trigger is actuated at T0. The first physical quantity, i.e. the power output, increase to a predefined value P1 and is held constant at that value, see Fig. 3b.

At T0, once the trigger is actuated, the increase in power output causes the speed of the motor 104 to increase from zero to a constant speed S2, see Fig. 3c. The load detector 108 keeps measuring any change of the second physical quantity, in this case, the speed of the motor, once the steady state is reached.

At T1, a load is applied to the tool, see Fig. 3d. For example, the user may bring the working component of the tool into contact with a work piece. This causes a decrease in the speed of the motor.

At T2, the load detector 108 may determine that the speed output value is below a value S1, where the delta in speed S2-S1 is above the pre-set threshold. The controller 106 may therefore determine that the motor 104 may be under a load condition.

The load detector 108 continues to measure the speed of the motor, until the load condition lasts for a pre-defined period of time. The load detector 108 measures the pre-defined period of time starting from T2. At T3, the load has been applied to the power tool 100 for more than the pre-defined period of time. That is, T3-T2 is equal to the pre-defined period of time. At T3, the controller 106 operates the motor 104 to switch to a normal state. The controller 106 increases the power output to a higher output value P2, where P2 corresponds to the actuation state of the trigger. The power output of the motor 104 may increase gradually and reach the higher power P2 at time T4. In this example, P2 corresponds to the maximum power output of the tool.

Along with the rise of the power output at T3, the decrease of the speed of the power tool 100 slows down and the speed rises to a higher constant speed value S3 under the application of a constant.

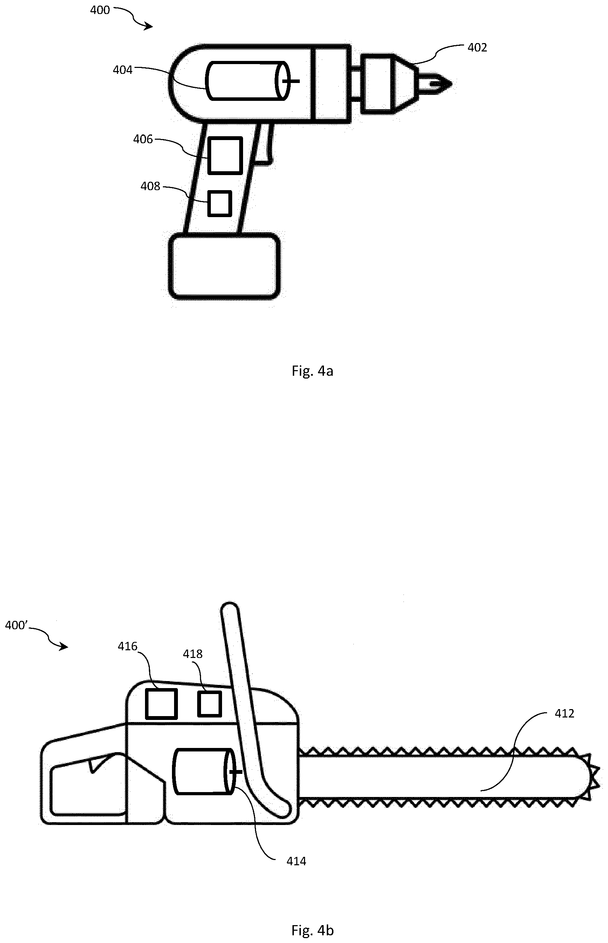

Figure 4a is a schematic diagram showing an electric power tool 400 according to an embodiment. The power tool 400 is a handheld power drill comprising a chuck 402 as a working component, a motor 404, a controller 406 and a load detector 408, substantially as described above.

Figure 4b is a schematic diagram showing an electric power tool 400' according to an embodiment. The power tool 400' is a handheld chainsaw comprising a blade and chain 412 as a working component, a motor 414, a controller 416 and a load detector 418, substantially as described above.

In addition to the examples shown in Figures 4a and 4b, the power tool may be embodied as, for example, a circular saw, a reciprocal saw, a jig saw, a hedge trimmer, string trimmer, lawnmower, blower, washer, vacuum cleaner or any other suitable tool or appliance.

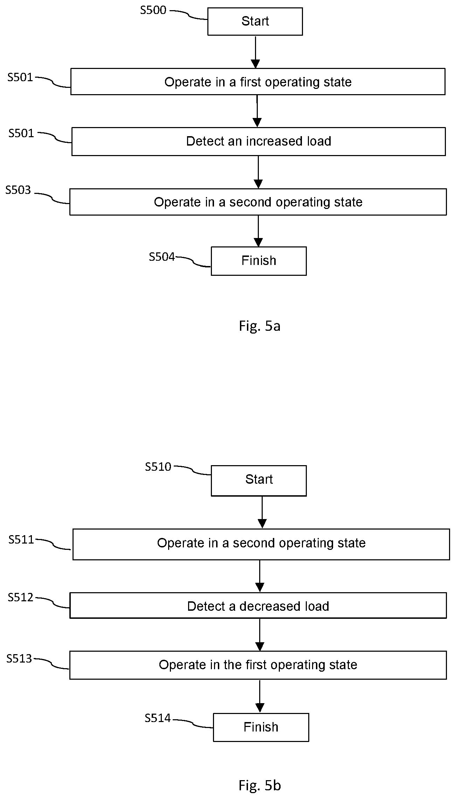

Figure 5a is a flowchart showing a method for controlling the operation of a motor of an electric power tool according to an embodiment. The method starts at step S500.

At step S501, the motor is operated in a first operating state by holding a first physical quantity related to the motor operation to be substantially constant.

At step S502, an increased load is detected by measuring a second physical quantity different from the first physical quantity.

At step S503, the motor is operated in a second operating state when a delta in the second physical quantity rises above a pre-set threshold and remains above the pre-set threshold for a pre-defined period of time. A power output of the motor in the second operating state is higher than the power output of the motor in the first operating state.

The method finishes at step S504.

Figure 5b is a flowchart showing a method for controlling the operation of a motor of an electric power tool according to an embodiment. The method starts at step S510.

At step S511, the motor may be operated in the second operating state.

At step S512, a decreased load is detected by measuring the second physical quantity.

At step S513, the motor is operated in the first operating state when the delta in the second physical quantity falls below a second pre-set threshold and remains below the second pre-set threshold for a second pre-defined period of time.

The method finishes at step S514.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. An electric power tool, comprising:
a motor;
a controller configured to control the motor to operate in a first operating state by holding a first physical quantity related to the motor operation to be substantially constant; and
a load detector configured to detect an increased load by measuring a second physical quantity different from the first physical quantity;
wherein the controller is configured to control the motor to operate in a second operating state when a delta in the second physical quantity measured by the load detector rises above a pre-set threshold and remains above the pre-set threshold for a pre-defined period of time;
wherein a power output of the motor in the second operating state is higher than a power output of the motor in the first operating state.

2. The electric power tool according to claim 1, wherein the first physical quantity and the second physical quantity are each selected from a list including current, torque, power rating, motor speed, and Pulse Width Modulation (PWM) status.

3. The electric power tool according to any preceding claim, wherein:
the load detector further detects a decreased load by measuring the second physical quantity; and
the controller further configures the motor to operate in the first operating state when the delta in the second physical quantity falls below a second pre-set threshold and remains below the second pre-set threshold for a second pre-defined period of time.

4. The electric power tool according to claim 3, wherein the second pre-set threshold is equal to the first pre-set threshold.

5. The electric power tool according to any preceding claim, wherein the controller is configured to set an initial value for the second physical quantity when the motor is operating in the first operating state.

6. The electric power tool according to any preceding claim, wherein the pre-set threshold for the delta in the second physical quantity is in the range of 5 to 30%.

7. The electric power tool according to any preceding claim, wherein the pre-defined period of time is in the range of 100 to 10000ms.

8. The electric power tool according to any preceding claim, wherein the power tool is one of a circular saw, a reciprocal saw, a chain saw, a jig saw and a power drill.

9. A method to control operation of a motor of an electric power tool, the method comprising:
operating in a first operating state by holding a first physical quantity related to the motor operation to be substantially constant;
detecting an increased load by measuring a second physical quantity different from the first physical quantity; and
operating in a second operating state when a delta in the second physical quantity rises above a pre-set threshold and remains above the pre-set threshold for a pre-defined period of time;
wherein a power output of the motor in the second operating state is higher than the power output of the motor in the first operating state.

10. The method to control operation of the motor according to claim 9, wherein the first physical quantity and the second physical quantity are each selected from a list including current, torque, power rating, motor speed, and Pulse Width Modulation (PWM) status.

11. The method to control operation of the motor according to any of claims 9 to 10, further comprising:
detecting a decreased load by measuring the second physical quantity; and
operating in the first operating state when the delta in the second physical quantity falls below a second pre-set threshold and remains below the second pre-set threshold for a second pre-defined period of time.

12. The method to control operation of the motor according to claim 11, wherein the second pre-set threshold is equal to the first pre-set threshold.

13. The method to control operation of the motor according to any of claims 9 to 12, further comprising setting an initial value for the second physical quantity when the motor is operating in the first operating state.

14. The method to control operation of the motor according to any of claims 9 to 13, wherein the pre-set threshold for the delta in the second physical quantity is in the range of 5 to 30%.

15. The method to control operation of the motor according to any of claims 9 to 14, wherein the pre-defined period of time is in the range of 100 to 10000ms.
